(19) Europäisches Patentamt
European Patent Office
Office européen des brevets

(11) Veröffentlichungsnummer: **0 218 028**
**B1**

(12) **EUROPÄISCHE PATENTSCHRIFT**

(45) Veröffentlichungstag der Patentschrift: **14.11.90**

(51) Int. Cl.[5]: **H 01 M 10/34,** H 01 M 4/24

(21) Anmeldenummer: **86110415.6**

(22) Anmeldetag: **28.07.86**

# (54) Gasdicht verschlossener Nickel/Cadmium-Akkumulator.

(30) Priorität: **28.09.85 DE 3534758**

(43) Veröffentlichungstag der Anmeldung:
**15.04.87 Patentblatt 87/16**

(45) Bekanntmachung des Hinweises auf die Patenterteilung:
**14.11.90 Patentblatt 90/46**

(84) Benannte Vertragsstaaten:
**DE FR GB IT**

(56) Entgegenhaltungen:
**FR-A-1 475 835**
**GB-A-2 023 918**
**US-A-3 438 812**

**JOURNAL OF POWER SOURCES, Band 8, Nr. 1, Juli 1982, Elsevier Sequoia, Lausanne, CH; J. MRHA et al.: "Plastic-bonded electrodes for nickel-cadmium accumulators. VIII. Study of oxygen recombination rate on plastic-bonded cadmium electrodes provided with active carbon catalyst"**

(73) Patentinhaber: **VARTA Batterie Aktiengesellschaft**
**Am Leineufer 51**
**D-3000 Hannover 21 (DE)**

(72) Erfinder: **Hofmann, Günther**
**Brückenstrasse 16**
**D-6238 Hofheim (DE)**
Erfinder: **Kleinsorgen, Klaus, Dipl.-Ing.**
**Ruppertshainer Strasse 21**
**D-6233 Kelkheim (DE)**
Erfinder: **VON Alpen, Ulrich, Dr. Dipl.-Phys.**
**Im Kastanienhain 5**
**D-6246 Glashütten (DE)**

(74) Vertreter: **Kaiser, Dieter Ralf, Dipl.-Ing.**
**Gundelhardtstrasse 72**
**D-6233 Kelkheim/Ts. (DE)**

(56) References cited:
**CHEMICAL ABSTRACTS, Band 100, Nr. 20, Mai 1984, Seite 178, Zusammenfassung Nr. 159560n, Columbus, Ohio, US; & CS-A-222 761 (JINDRA et al.) 01-02-1984**

**EP 0 218 028 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft einen gasdicht verschlossenen Nickel/Cadmium-Akkumulator in Knopfform mit einer positiven Elektrode, einer negativen Elektrode, welche eine in ein Nickeldrahtgewebe-Körbchen in Tablettenform eingepreßte Masseelektrode ist, einem zwischenliegenden Separator und mit einer die negative Elektrode elektrisch kontaktierenden kunststoffgebundenen Kohleschicht zur katalytischen Unterstützung der Sauerstoffreduktion.

Gasdichte alkalische Akkumulatoren vom Knopfzellentyp lassen sich mit Strömen i≥0,3CA nur unter besonderen Sicherheitsvorkehrungen wieder aufladen oder überladen, da der entstehende Gasdruck das Zellengefäß zu sprengen droht.

Konventionelle Nickel/Cadmium-Knopfzellen enthalten negative Elektroden, die so dimensioniert sind, daß in ihnen noch ungeladene Masse ($Cd(OH)_2$) vorliegt, wenn die positive Elektrode sich bereits im vollgeladenen Zustand befindet und nur noch gasförmigen Sauerstoff entwickelt. Dieser gelangt an die negative Elektrode, wo er auf chemischem bzw. elektrochemischem Wege reduziert wird. Hierdurch bleibt der Sauerstoffdruck bei Betrieb mit kleinen Strömen in einem für das Zellengefäß umschädlichen Bereich. Andererseits erreicht die negative Elektrode aufgrund ihrer kapazitätsmäßigen Überdimensionierung, der sogenannten Ladereserve, niemals den vollgeladenen Zustand, so daß eine Entwicklung von Wasserstoff verhindert wird. Der sich einstellende stationäre Gleichgewichtsdruck hängt im übrigen sowohl von der Elektrodengeometrie als auch von Elektrolytmenge und Umgebungstemperatur ab.

Der Wunsch nach schnellerer Ladbarkeit, zu der Ströme bis zu i≥0,5 CA aufgewendet werden müßten, überfordert jedoch das durch die Zellenbalance herkömmlicher Knopfzellen vorgegebene Reduktionsvermögen für gasförmigen Sauerstoff. Unter diesen Umständen können Drücke bis zu 20 bar auftreten, die den bei ca. 10 bar liegenden Berstdruck normaler Knopfzellengehäuse weit übersteigen.

Um den Gasverzehr daher zu intensivieren, hat man die Wirksamkeit der negativen Elektrode durch Einführung von Hilfselektroden, die mit der Cadmiumelektrode elektrisch parallel geschaltet sind und vorzugsweise aus katalytisch aktiven Materialien bestehen, zu unterstützen versucht. In einem bekannten Fall nach DE—OS 28 26 780 besteht eine solche Hilfselektrode aus einer netzarmierten Aktivkohleschicht, die hydrophil ist, und einer hydrophobenschicht aus porösem Polytetrafluoräthylen (PTFE), wobei die Aktivkohleschicht der Oberfläche der Cadmiumelektrode unmittelbar aufliegt, während die hydrophobe PTFE-Schicht von der Oberfläche der Cadmiumelektrode angewandt ist.

In anderen Fällen (vergl. J. MRHA et al., Journal of Power Sources, Vol. 8 Ne. 1, Seiten 3-8 (1982), Elsevier Sequoia, Lausanne (CH)), sind die Hilfselektroden zumeist aus einer Mischung von Aktivkohle und PTFE-gebundener Cadmiummasse, welche identisch mit der aktiven Masse der negativen Hauptelektrode ist, zusammengesetzt und als gesonderte Schichten auf die dem Gasraum zugekehrte Seite der Hauptelektrode aufgepreßt.

Aus der US—A—3 438 812 sind auch Cadmiumelektroden bekannt, die am gleichen Ort nur eine dünne Oberflächenbelegung eines katalytisch wirksamen Materials, z.B. fein verteiltes Platin, aufweisen.

Das elektrokatalytisch aktive Material einer Hilfselektrode, auch Sauerstoffverzehrelektrode, erleichtet den Elektronenaustausch im Sinne der Gleichung

$$O_2+2H_2O+4e\rightarrow 4OH$$

und setzt so das anfallende Sauerstoffgas auf elektrochemischem Wege um.

Die der Erfindung zugrundeliegende Aufgabe besteht darin, einen Nickel/Cadmium-Akkumulator vom Knopfzellentyp anzugeben, bei welchem eine Kohlebeschichtung der negativen Elektrode zum Zwecke der Sauerstoffreduktion auf eine besonders einfache und fertigungstechnisch rationelle Weise realisiert ist.

Die Aufgabe wird erfindungsgemäß mit den im kennzeichnenden Teil des Anspruchs 1 angegebenen Mitteln gelöst.

Die Erfindung nutzt demzufolge für ihren speziellen Zweck die der Armierung der gepreßten Masseelektroden für Knopfzellen dienenden Gewebekörbchen bzw. deren Abdeckungen aus Nickeldrahtgewebe unmittelbar aus. Bei der herkömmlichen Massenfertigung werden beide Teile aus endlosem Gewebeband zunächst als Ronden, gelegentlich auch in ovalen Formen, ausgestanzt, das eine Teil zu einem oben offenen Körbchen geformt und nach Einlegen der unabhängig vorgepreßten Elektrodentablette sowie des Körbchendeckels der über die Deckeleinlage hinausstehende Rand des Körbchens nach innen umgebördelt. Die Masseelektrode ist so mit einer guten elektronischen Ableitung versehen und allseitig gegen Ausschlammen geschützt.

Es ist aus möglich, Nickeldrahtgewebekörbchen so zu formen, daß der obere Teil des Randes nach außen absteht und so einen peripher umlaufenden Flansch bildet, der sich mit dem Rand eines entsprechend zugeschnittenen Deckelteils mit einem größeren Umriß als dem der Elektrodentablette überlappt, und das Körbchen dann durch einen beide Randpartien erfassenden Bördelvorgang zu verschließen.

Erfindungsgemäß ist nun in das Nickeldrahtgewebe zumindest des Körbchendeckels der negativen Cadmiumelektrode eine Mischung aus Aktivkohle, Leitgraphit und einem Bindemittel, vorzugsweise durch Aufwalzen, eingebracht. Als Bindemittel ist beispielsweise Polyisobutylen oder wegen seiner Oxidationsbeständigkeit noch besser Polytetrafluoräthylen (PTFE) geeignet. Die Anteile der drei Komponenten an der kohlehaltigen Mischung sollten erfindungsgemäß bei

57—58 Gew.% Aktivkohle, 8—12% Gew.% Leitruß und 22—28 Gew.% PTFE liegen.

Mit der Beschichtung des aus Ni-Gewebe bestehenden Körbchendeckels durch die angegebene Aktivkohlemischung ist der negativen Cadmiumelektrode des erfindungsgemäßen gasdichten Akkumulators eine ebenso einfache wie wirksame Hilfselektrode für den Sauerstoffverzehr beigegeben, deren Eingliederung in den üblichen Fertigungsablauf der Knopfzelle keinerlei zusätzliche Montageschritte erfordert. Unter den erwähnten Strombedingungen für eine Schnelladung findet kein kritischer Druckanstieg aufgrund schleppenden Gasverzehrs mehr statt.

Besonders vorteilhaft ist es, wenn im Hinblick auf den einwandfreien Gasverzehr, der das Vorhandensein von Dreiphasengrenzen erforderlich macht, dem Körbchendeckel außenseitig noch eine hochporöse PTFE-Folie zugeordnet ist. Sie wird zweckmäßig auf den kohlebeschichteten Körbchendeckel bei der Montage aufgelegt und beim Umschlagen bzw. Umbördeln des überstehenden Körbchenrandes gemeinsam mit dem Deckel fixiert. Wie sich gezeigt hat, übt die PTFE-Folie aufgrund ihrer Hydrophobizität neben dem bereits in der Kohlebeschichtung vorhandenen PTFE eine verstärkte zurückstoßende Wirkung auf die Elektrolytflüssigkeit aus, die im wesentlichen im Separator und in den porösen Elektroden festgelegt ist. Auf diese Weise wird ein Überfluten der kohlehaltigen Schicht im Falle einer zu reichlichen Elektrolytdosierung sicher verhindert und der Gasverzehr aufrecht erhalten.

In einer weiteren vorteilhaften Ausführungsform der Erfindung kann die negative Cadmiumelektrode, entweder zusätzlich zu der beschriebenen PTFE-Folie oder für sich allein, mit einer Ionenaustauschermembran versehen werden, die zwischen der Elektrodentablette und dem beschichteten Körbchendeckel angeordnet ist. Gegebenenfalls liegt dann mit dieser Membran, dem kohlebeschichteten Körbchendeckel und der PTFE-Folie eine Dreischichtanordnung vor. Die Ionenaustauschermembran ist für aus der Elektrodentablette evtl. austretendes Cadmium undurchlässig, verhindert damit eine Abscheidung des Metalls im Bereich der Aktivkohleschicht und schützt deren katalytische Wirksamkeit.

Die erfindungsgemäßen Maßnahmen werden durch zwei Figurendarstellungen verdeutlicht.

Figur 1 zeigt einen Nickel/Cadmium-Akkumulator vom Knopfzellentyp gemäß der Erfindung im Schnitt.

Figur 2 zeigt die Druckentwicklung in einer Nickel/Cadmium-Zelle 250 DK mit und ohne erfindungsgemäße Ausstattung.

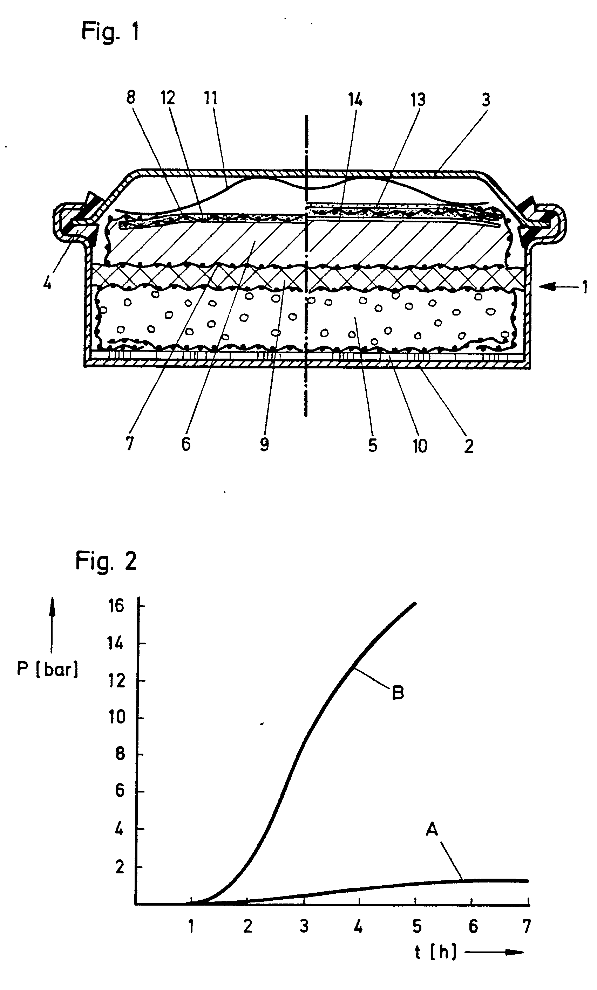

Nach Figur 1 enthält die Knopfzelle 1 in dem Gehäusebecher 2 mit Deckel 3, die durch die Kunststoffdichtung 4 gegeneinander isoliert und abgedichtet sind, eine positive Ni O OH-Elektrodentablette 5 und eine negative Cd-Elektrodentablette 6, beide durch Körbchen 7 und Körbchendekkel 8 aus Nickeldrahtgewebe armiert, fermer einen Vliesseparator 9, zugleich Elektrolytreservoir, eine Bodeneinlage 10 sowie eine Kontaktfeder 11.

In einer ersten Ausführungsform der Erfindung (linke Hälfte der Figure 1) ist der Körbchendeckel 8 der Cadmiumelektrode mit einer in das Nickeldrahtgewebe eingewalzten und PTFE-gebundenen Aktivkohleschicht 12 versehen. In einer zweiten, vorzugsweisen Variante der Erfindung (rechte Hälfte der Figure 1) ist die Aktivkohleschicht sowohl außenseitig durch eine hochporöse PTFE-Folie 13 als auch innenseitig durch eine Ionenaustauschermembran 14 ergänzt.

Den Kurven der Figur 2 liegen Zahlenwerte der Tabelle 1 zugrunde, die durch Druckmessungen an Knopfzellen des Typs 250 DK (K=250 mAh) mit (Kurve A) und ohne erfindungsgemäßen Gasverzehr (Kurve B) gefunden wurden. Die Messungen wurden bei einer Umgebungstemperatur von 20°C während des 53. Ladezyklus bei einem Ladestrom i=0,5 CA (125 mA) durchgeführt.

TABELLE 1

Innendrücke P von Ni/Cd-Knopfzellen DK 250 in bar

| Ladedauer (h) | konventionelle Zelle | erfindungsgemäße Zelle |
|---|---|---|
| 1 | 0 | 0 |
| 2 | 1,9 | 0,3 |
| 3 | 8,5 | 0,6 |
| 4 | 13,0 | 1,0 |
| 5 | 16,0 | 1,2 |
| 6 | 17,4 | 1,4 |
| 7 | 18,0 | 1,4 |

Die günstige Wirkung der als Gasverzehrelektrode fungierenden erdinfungsgemäßen Aktivkohleschicht ist hierbei augenfällig. Bei deren Gegenwart stellt sich ein weit unter der Berstgrenze von ca. 10 bar liegender konstanter Gasdruck ein. Die Versuchsdurchführung in einem Druckgefäß verhinderte ein Bersten der konventionelle Vergleichszelle, welches nach einer Ladedauer von ca. 3,5 h eingetreten wäre. Kurve B zeigt deshalb an dieser Stelle keinen Abbruch.

**Patentansprüche**

1. Gasdicht verschlossener Nickel/Cadmium-Akkumulator in Knopfform mit einer positiven Elektrode, einer negative Elektrode, welche eine in ein Nickeldrahtgewebe-Körbchen in Tablettenform eingepreßte Masseelektrode ist, einem zwischenliegenden Separator und mit einer die negative Elektrode elektrisch kontaktierenden kunststoffgebundenen Kohleschicht zur katalytischen Unterstützung der Sauerstoffreduktion, dadurch gekennzeichnet, daß der Kohleschicht eine Mischung aus 58 bis 72 Gew.% Aktivkohle, 8 bis 12 Gew.% Leitruß und 22 bis 28 Gew.% Polytetrafluorethylen zugrundeliegt, die in das Nickeldrahtgewebematerial des Körbchendeckels eingebracht ist, und daß zwischen der Elektrodentablette und dem kohlebeschichteten Körbchendeckel eine Ionenaustauschermembran angeordnet ist.

2. Nickel/Cadmium-Akkumulator nach Anspruch 1, dadurch gekennzeichnet, daß der kohlebeschichtete Körbchendeckel außenseitig mit einer hydrophoben Membran versehen ist.

3. Nickel/Cadmium-Akkumulator nach Anspruch 2, dadurch gekennzeichnet, daß die hydrophobe Membran eine Polytetrafluorethylenfolie ist.

**Revendications**

1. Accumulateur nickel/cadmium étanche aux gaz, en forme de bouton, avec une électrode positive et une électrode négative, chacune de ces électrodes étant constituée par une masse active pressée sous forme de tablette dans une petite corbeille en tissu de fils de nickel, avec un séparateur placé entre ces électrodes, et avec une couche de charbon liée à une matière synthétique se trouvant en contact électrique avec l'électrode négative pour aider catalytiquement la réduction d'oxygène, accumulateur caractérisé en ce qu'à la base de la couche de charbon est un mélange de 58 à 72% en poids de charbon actif, de 8 à 12% en poids de suie conductrice et de 22 à 28% en poids de polytétrafluoréthylène, qui est introduit dans le matériau en tissu de fils de nickel du couvercle de la petite corbeille, tandis qu'entre la tablette d'électrode et le couvercle revêtu de charbon de la petite corbeille, est disposée une membrane d'échangeur d'ions.

2. Accumulateur nickel/cadmium selon la revendication 1, caractérisé en ce que le couvercle revêtu de charbon de la petite corbeille est muni sur sa face externe, d'une membrane hydrophobe.

3. Accumulateur nickel/cadmium selon la revendication 2, caractérisé en ce que la membrane hydrophobe est un film de polytétrafluoréthylène.

**Claims**

1. Gas-tight nickel cadmium battery in the shape of a button with a positive electrode, a negative electrode, which is an electrode comprising an active mass pressed in the form of a tablet into a small nickel wire cloth basket, an intermediate separator and with a carbon layer bonded with synthetic material and electrically contacting the negative electrode, for catalytically supporting the oxygen reduction, characterised in that forming the basis of the carbon layer, is a mixture of 58 to 72% by weight active carbon, 8 to 12% by weight conducting carbon black and 22 to 28% by weight polytetrafluoroethylene, which is introduced into the nickel wire cloth material of the small basket lid and that located between the electrode tablet and the carbon-coated small basket lid is an ion exchange membrane.

2. Nickel cadmium battery according to Claim 1, characterised in that the carbon-coated small basket lid is provided on the outside with a hydrophobic membrane.

3. Nickel cadmium battery according to Claim 2, characterised in that the hydrophobic membrane is a polytetrafluoroethylene film.

Fig. 1

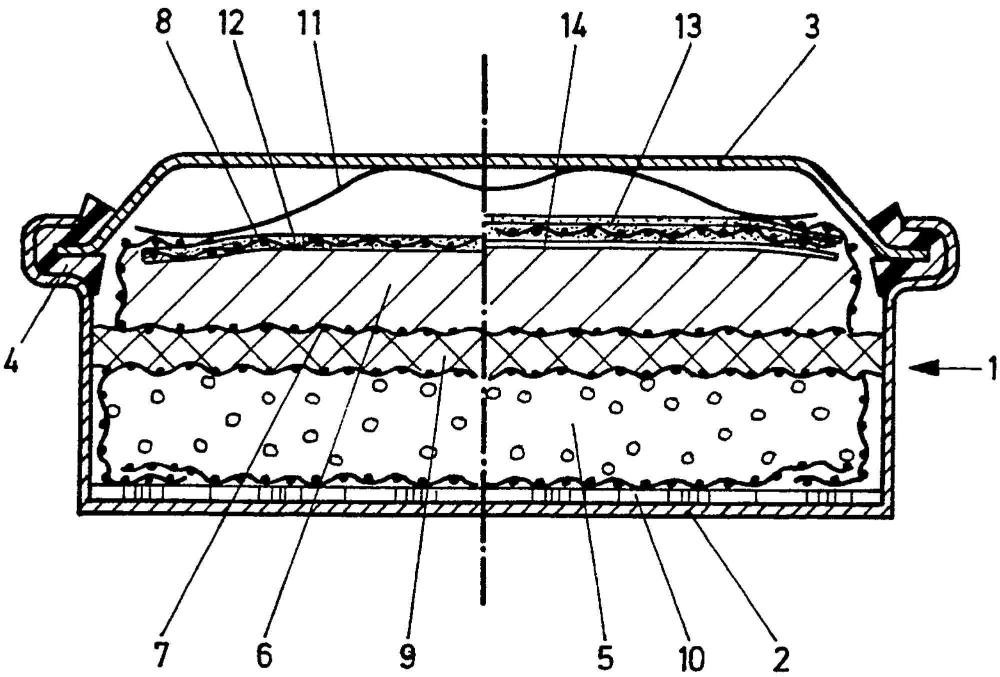


Fig. 2